# EUROPÄISCHE PATENTSCHRIFT

(11) **EP 1 663 563 B1**
(45) Veröffentlichungstag und Bekanntmachung des Hinweises auf die Patenterteilung: **14.12.2016**
(21) Anmeldenummer: 04730943.0
(22) Anmeldetag: 04.05.2004
(51) Int. Cl.: B23K 11/30

(54) **PUNKTSCHWEISSZANGE FÜR ROBOTERANWENDUNGEN ZUM WIDERSTANDSSCHWEISSEN VON WERKSTÜCKEN**
SPOT WELDING TONGS FOR ROBOTIC APPLICATIONS IN RESISTANCE WELDING OF WORKPIECES
PINCE A SOUDER POUR UTILISATIONS SUR ROBOTS, POUR LE SOUDAGE PAR RESISTANCE DE PIECES

(30) Priorität: 03.07.2003 AT 10232003
(43) Veröffentlichungstag der Anmeldung: 07.06.2006
(60) Teilanmeldung: 12159470.9
(73) Patentinhaber: Fronius International GmbH, 4643 Pettenbach (AT)
(72) Erfinder: STIEGLBAUER, Walter, A-4901 Manning (AT); WEIGERSTORFER, Günter, A-4621 Sipbachzell (AT)
(74) Vertreter: Sonn & Partner Patentanwälte
(86) Internationale Anmeldenummer: PCT/AT2004/000151
(87) Internationale Veröffentlichungsnummer: WO 2005/002776

(56) Entgegenhaltungen:
- DE-A- 4 416 504
- DE-A- 19 754 546
- GB-A- 571 401
- GB-A- 1 559 068
- US-A- 2 678 367
- US-A- 4 684 778

## Beschreibung

Die Erfindung betrifft eine Punktschweißzange für Roboteranwendungen zum Widerstandsschweißen von Werkstücken, insbesondere Blechen, nach dem Oberbegriff des Patentanspruchs 1.

Die DE 44 16 504 A1 zeigt eine Punktschweißzange mit einer Wickelvorrichtung zum Auf- und Abwickeln eines Elektrodenschutzbandes ohne im Detail auf den Verlauf des Bandes und die Anordnung der Wickelvorrichtung einzugehen.

Aus der DE 197 54 546 C1 ist ein Punktschweißwerkzeug mit einer Wickelvorrichtung zum Auf- und Abwickeln von an der Elektrodenspitze der Punktschweißelektrode quer anliegendem Folienband bekannt. Das Punktschweißwerkzeug ist mit einer ringförmigen Abwickelspule zum Abwickeln des Folienbandes und einer ringförmigen Aufwickelspule zum Aufwickeln des Folienbandes ausgestattet und weist eine ringförmige Antriebsvorrichtung zum getakteten Drehen der Aufwickelspule auf. Die Abwickelspule, die Aufwickelspule und die Antriebsvorrichtung sind koaxial zueinander nebeneinander rings des Elektrodenschafts bzw. des Elektrodenhalters der Punktschweißelektrode angeordnet. Schräg zu dem Elektrodenschaft und im radialen Abstand von der Abwickelspule ist eine erste Schränkrolle angeordnet, mittels derer das Folienband von der Abwickelspule zur Elektrodenspitze hin umlenkbar und querstellbar ist. Ferner ist schräg zum Elektrodenschaft und im radialen Abstand von der Aufwickelspule eine zweite Schränkrolle angeordnet, mittels derer das Folienband von der Elektrodenspitze zu der Aufwickelspule hin umlenkbar und querstellbar ist, wobei die beiden Schränkrollen aneinander gegenüberliegend seitens des Elektrodenschafts angeordnet sind.

Eine ähnliche Ausbildung ist auch aus der JP 05 192 774 bekannt, bei der ebenfalls die Auf- und Abwickelspulen am Elektrodenschaft bzw. am Elektrodenhalter angeordnet sind.

Nachteilig ist bei den zuvor genannten Ausbildungen, dass durch die Anordnung der Auf- und Abwickelspule im Bereich des Elektrodenschafts bzw. des Elektrodenhalters die Zugänglichkeit des Punktschweißwerkzeuges sehr eingeschränkt wird, da eine wesentliche Verbreiterung der Punktschweißzange im Endbereich, insbesondere im Schweißbereich, zustande kommt. Somit können mit einem derartigen Punktschweißwerkzeug nur leicht zugängliche Werkstücke punktgeschweißt werden.

Andere Konstruktionen von Punktschweißgeräten mit Bändern zum Schutz der Elektroden sind aus der JP 10 029 071 A, der JP 08 118 037 A, JP 04 322 886 A oder der JP 05 192 774 A bekannt. Dabei wird bei den Punktschweißwerkzeugen das Band, welches über eine Wickelvorrichtung zu- und abgeführt wird, über die Elektrode ebenfalls als Schutz vor der Berührung der Elektrode mit dem Werkstück bzw. Bauteil positioniert, so dass bei einem Punktschweißprozess das Band am Werkstück bzw. Bauteil zum Anliegen kommt. Dabei werden die Auf- und Abwickelspulen unabhängig von dem Punktschweißwerkzeug angeordnet bzw. befestigt.

Die US 5 961 854 A zeigt eine Punktschweißzange mit einer Wickelvorrichtung zum Auf- und Abwickeln eines Elektrodenschutzbandes, wobei keine näheren Angaben über die Anordnung der Wickelvorrichtung und den Verlauf des Elektrodenschutzbandes gegeben sind. Die Punktschweißzange ist relativ voluminös, wodurch die Zugänglichkeit von Werkstücken beeinflusst wird.

Die US 4 481 401 A zeigt eine Punktschweißzange mit Wickelvorrichtungen zum Auf- und Abwickeln eines Elektrodenschutzbandes, wobei vor der Elektrode ein Ring zur Führung des Elektrodenschutzbandes angeordnet ist. Von diesem Ring zur Wickelvorrichtung verläuft das Band jedoch in einem Winkel zum Zangenarm, wodurch auch relativ viel Platz benötigt wird.

Die SU 1 206 038 A zeigt eine Punktschweißzange, bei der die Wickelvorrichtung für das Elektrodenschutzband am Zangenarm befestigt ist und in einem Winkel von ca. 45° zur Elektrode geführt wird. Durch diese Anordnung wird besonders viel Platz benötigt, weshalb sich diese Punktschweißzange lediglich zum Schweißen flacher Werkstücke eignet. Im automatisierten Bereich insbesondere bei Schweißrobotern ist ein Einsatz nur beschränkt möglich.

Auch die GB 571 401 A sowie die JP 55141387 A zeigen Punktschweißzangen mit Wickelvorrichtungen für Elektrodenschutzbänder, welche relativ viel Platz einnehmen, weshalb eine Anwendung bei Schweißrobotern praktisch nicht möglich ist.

Schließlich zeigt die DE 199 48 043 A1 eine Roboterschweißzange gemäß der vorliegenden Anmeldung, wobei jedoch keine Wickelvorrichtung zum Auf- und Abwickeln eines Bandes zum Schutz zumindest einer Elektrode geoffenbart ist.

Nachteilig ist hierbei, dass damit ein sehr großer Platzbedarf notwendig ist, so dass eine direkte Anwendung nur bei flachen Werkstücken möglich ist. Somit ist ein Einsatz im automatisierten Bereich, insbesondere bei einem Roboter, nicht möglich.

Ein weiterer sehr wesentlicher Nachteil liegt bei dem zuvor erwähnten Stand der Technik darin, dass das Band bei der Förderung über die Elektrode gezogen wird und somit aufgrund der Reibung zwischen der Elektrode und dem Band ein hoher Elektrodenverschleiß zustande kommt.

Die Aufgabe der vorliegenden Erfindung besteht daher in der Schaffung einer Punktschweißzange für Roboteranwendungen zum Widerstandsschweißen von Werkstücken, bei der die Zugänglichkeit nicht wesentlich beeinflusst wird und ein sehr einfacher und kompakter Aufbau der Punktschweißzange mit einem Elektrodenschutzband geschaffen wird. Darüber hinaus soll der Wechsel des Bandes möglichst einfach und rasch möglich sein.

Die erfindungsgemäße Aufgabe wird dadurch gelöst, dass am Zangenarm und an der Elektrodenaufnahme zumindest eine Führungsnut für die Führung des Bandes entlang des Zangenarmes angeordnet ist, und an jeder Elektrode im Bereich einer Elektrodenkappe ein Distanzhalter und ein Druckelement angeordnet sind, die in Längsrichtung der Elektrode beweglich mit dieser verbunden sind, wobei das Druckelement eine Kraft auf den Distanzhalter ausübt und der Distanzhalter und das Druckelement eine Führung für das Band aufweisen, sodass bei geschlossenen Zangenarmen der Distanzhalter zurückgeschoben wird und die Elektrode am Band zum Anliegen kommt, und während oder nach Öffnen der Zangenarme das Band von der Elektrode distanzierbar ist. Dadurch wird erreicht, dass das Band bei geöffneter Punktschweißzange nicht direkt an der Elektrodenkappe zum Anliegen kommt, sodass das Band beim Verschieben nicht an der Elektrode reiben kann und somit die Lebensdauer der Elektrode wesentlich erhöht wird.

Gemäß einem weiteren Merkmal der Erfindung ist vorgesehen, dass am Zangenarm und bzw. oder an der Elektrodenaufnahme Vorrichtungen zum Führen und Umlenken des Bandes, insbesondere Umlenkrollen und Gleitflächen, angeordnet sind.

Die Abspulrolle und bzw. oder die Aufwickelrolle der Wickelvorrichtung ist mit einem Antriebsmittel, insbesondere einem elektronisch ansteuerbaren Motor, gekoppelt.

Wenn der Zangenarm aus einem Grundprofil gebildet ist und beiderseits des Grundprofils Seitenteile angeordnet sind, die über das Grundprofil hinausragen und die dadurch entstehende Vertiefung als Führungsnut für das Band ausgebildet wird, ist eine einfache Herstellung des Zangenarms verbunden.

Wenn an den Stirnseiten der Seitenteile zumindest eine Abdeckplatte zur Abdeckung der zwischen den Seitenteilen gebildeten Führungsnut angeordnet ist, kann die Führungsnut vor Fremdkörpern oder etwaiger Verschmutzung geschützt werden.

Ebenso ist es möglich, dass der Zangenarm aus einem Grundprofil gebildet wird, und dass in dem Grundprofil die Führungsnut eingearbeitet ist. Dabei wird die Führungsnut in das Grundprofil, beispielsweise durch Fräsen, eingearbeitet.

Ein Nachrüsten bestehender Punktschweißzangen ohne größerem Aufwand ist dadurch möglich, dass die Führungsnut durch zusätzliche Führungselemente gebildet ist, die am Zangenarm und bzw. oder der Elektrodenaufnahme angeordnet, beispielsweise aufgesteckt oder aufgeschraubt, werden.

Eine besonders einfache Ausführungsvariante ist auch dadurch gegeben, dass der Zangenarm aus mehreren Einzelteilen gebildet wird, welche derart miteinander verbunden werden, dass im Zentrum des Zangenarms ein Hohlraum zur Verfügung des Bandes gebildet wird.

Gemäß einem weiteren Merkmal der Erfindung ist eine Bremsvorrichtung zum Fixieren und Spannen des Bandes vorgesehen, welche vorteilhafterweise im Bereich der Abspul- oder Aufwickelrolle angeordnet ist und ein Verkanten und Durchhängen des Elektrodenschutzbandes vermeidet.

Wenn die Bremsvorrichtung mit einer Steuervorrichtung verbunden ist, kann eine entsprechende Steuerung der Bremsvorrichtung erfolgen.

Die vorliegende Erfindung wird anhand der beigefügten Zeichnungen näher erläutert.

Darin zeigen:
Fig.1 eine perspektivische Ansicht einer erfindungsmäßigen Punktschweißzange;
Fig.2 eine perspektivische Ansicht eines Zangenarms der erfindungsgemäßen Punktschweißzange;
Fig.3 eine Schnittdarstellung des Zangenarms entlang der Schnittlinie III-III in Fig.2;
Fig.4 eine weitere perspektivische Ansicht des Zangenarms entlang der gemäßen Punktschweißzange;
Fig.5 wiederum eine Schnittdarstellung des in Fig.4 dargestellten Zangenarms entlang der in Fig.4 dargestellten Schnittlinie V-V;
Fig.6 eine weitere perspektivische Ansicht eines Zangenarms der erfindungsgemäßen Punktschweißzange;
Fig.7 eine Schnittdarstellung eines Zangenarms entlang der Schnittlinie VII-VII in Fig.6;
Fig.8 eine weitere perspektivische Ansicht eines Zangenarms der erfindungsgemäßen Punktschweißzange;
Fig.9 wiederum eine Schnittdarstellung entlang der Schnittlinie IX-IX gemäß Fig.8;
Fig.10 und 11 perspektivische Ansichten erfindungsmäßiger Punktschweißzangen.

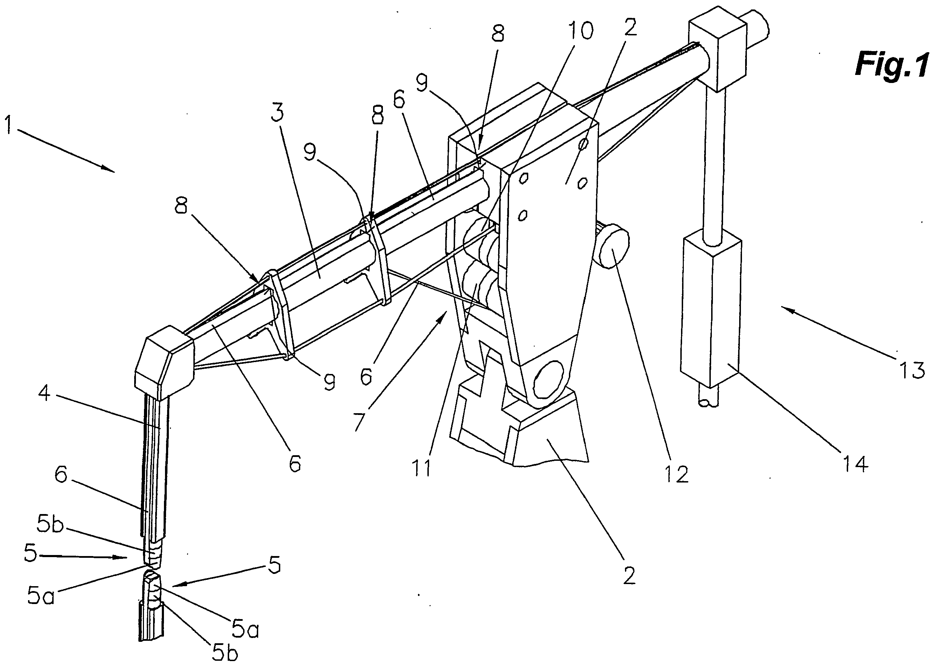

In Fig.1 ist eine Punktschweißzange 1 für Roboteranwendungen zum Widerstandsschweißen von Werkstücken, insbesondere Blechen, perspektivisch dargestellt, wobei übersichtshalber nur eine Hälfte der Punktschweißzange dargestellt wurde.

Die Punktschweißzange 1 besteht aus einem Grundkörper 2 und Zangenarmen 3, an welchen Elektrodenaufnahmen 4 und Elektroden 5 angeordnet sind und um welche ein umlaufendes Band 6 zum Schutz der Elektroden 5, läuft. Das Band 6 wird von einer Wickelvorrichtung 7, welche vorzugsweise an dem Grundkörper 2, aber auch an den Zangenarmen 3 angeordnet sein kann, abgerollt und entlang der Zangenarmgeometrie über den Zangenarm 3, die Elektrodenaufnahme 4 und die Elektrode 5 und gegenüberseitig wieder zurück zur Wickelvorrichtung 7 geführt.

Die Elektrode 5 ist speziell für den Einsatz des Bandes 6 aufgebaut. Selbstverständlich ist es aber auch möglich, jede beliebige aus dem Stand der Technik bekannte Elektrode 5 einzusetzen. An der Elektrode 5, die im Inneren des Aufbaus angeordnet ist, ist im Bereich einer Elektrodenkappe ein Distanzhalter 5a und ein Druckelement 5b angeordnet, die in Längsrichtung der Elektrode 5 beweglich mit dieser verbunden sind, wobei das Druckelement 5b eine Kraft auf den Distanzhalter 5a ausübt. Der Distanzhalter 5a und das Druckelement 5b weisen eine Führung für das Band 6 auf, so dass das Band 6 von der Elektrode 5 distanzierbar ist. Der Distanzhalter 5a hebt während oder nach dem Öffnen der Punktschweißzange 1 das Band 6 von der Elektrodenoberfläche bzw. von der Elektrodenkappe ab, wogegen während eines Schweißvorganges, also bei geschlossener Punktschweißzange 1, der Distanzhalter 5a zurück geschoben wird, so dass die Elektrode 5 bzw. die Elektrodenkappe am Band 6 zum Anliegen kommt. Dabei wird zusätzlich aufgrund des Druckelements 5b ein Druck bzw. eine Kraft vom Distanzelement 5a auf das Werkstück bzw. Blech ausgeübt, so dass beispielsweise das prozessbedingte Aufbiegen bzw. Wölben der Bleche bzw. Bauteile verhindert wird. Durch den Einsatz einer derartigen Elektrode 5 bzw. eines derartigen Elektrodenaufbaus wird erreicht, dass das Band 6 bei geöffneter Punktschweißzange 1 nicht direkt an der Elektrodenkappe zum Anliegen kommt, so dass das Band 6 beim Verschieben nicht an der Elektrode 5 reiben kann und somit die Lebensdauer der Elektrode 5 wesentlich erhöht wird.

Damit nunmehr das Band 6 an die Elektrode 5 herangeführt werden kann, sind am Zangenarm 3 und/oder an der Elektrodenaufnahme 4 Vorrichtungen, insbesondere Umlenkrollen und Gleitflächen 9, zum Führen und Umlenken des Bandes 6 angeordnet. Das Band 6 erstreckt sich dabei von einer in der Wickelvorrichtung 7 angeordneten Abspulrolle 10 über Führungsnuten 8 bzw. einem Kanal, der Elektrodenaufnahme 4 zur Elektrode 5 und von dieser wiederum über die Elektrodenaufnahme 4 und über Führungsnuten 8 bzw. einem Kanal zu einer Aufwickelrolle 11, welche wiederum in der Wickelvorrichtung 7 angeordnet ist. Die Abspulrolle 10 und/oder die Aufwickelrolle 11 ist mit einem Antriebsmittel 12, insbesondere einem elektronisch ansteuerbarem Motor, gekoppelt, so dass durch Ansteuerung des Antriebsmittels 12 eine gezielte Verschiebung des Bandes 6 ermöglicht wird.

Die Abspulrolle 10 und Aufwickelrolle 11 ist so konzipiert, dass ein einfacher und unkomplizierter Wechsel bzw. Austausch der Rollen bzw. des Bandes 6 vorgenommen werden kann. Dabei sind die Abspulrolle 10 und die Aufwickelrolle 11 derart im Grundkörper 2 oder im Zangenarm 3 gelagert, dass diese einfach ausgetauscht werden können, wobei beim Einsatz der Abspulrolle 10 und/oder der Aufwickelrolle 11 eine automatische Koppelung mit dem Antriebsmittel 12 hergestellt wird. Durch die Anordnung der Abspulrollen 10 und der Aufwickelrollen 11 sowie des Antriebsmittels 12 am Grundkörper 2 oder aber auch an den Zangenarmen 3 wird erreicht, dass ein leichterer Zugang zu den Spulen gewährleistet ist und dadurch das Auswechseln der Abspulrolle 10 und Aufwickelrolle 11 wesentlich vereinfacht und erleichtert wird. Ein weiterer positiver Effekt dieser Anordnung der Abspulrolle 10 und Aufwickelrolle 11 besteht darin, dass durch die Führung des Bandes 6 von hinten, also von dem Grundkörper 2 zu der Elektrode 5, keine störenden Elemente bzw. Teile vorhanden sind, was zur Folge hat, dass auch bei komplizierten zugänglichen Werkstücken nahezu problemlos eine Punktschweißung durchgeführt werden kann, da keinerlei Einschränkung der Zugänglichkeit gegenüber Schweißzangen ohne Band 6 gegeben ist. Durch diese Ausgestaltung wird auch erreicht, dass die Baugröße der Punktschweißzange 1 gering gehalten werden kann.

Der Vollständigkeit halber wird erwähnt, dass die Zangenarme 3 verstellbar gelagert sind und durch ein Betätigungsmittel 13, welches zum Beispiel durch einen Servomotor oder einen Zylinder 14 gebildet sein kann, verstellt werden.

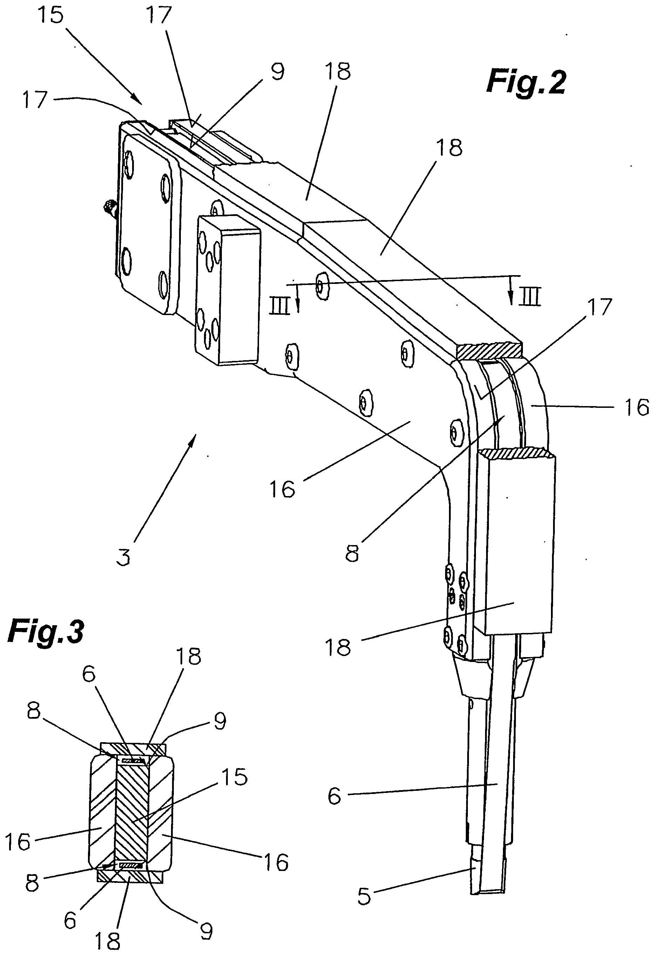

In Fig.2 ist ein Zangenarm 3 einer Punktschweißzange 1 perspektivisch und schematisch vereinfacht und in Fig.3 eine Schnittdarstellung des Zangenarms 3 entlang der Schnittlinie III-III in Fig.2 dargestellt. Die Abspulrolle 10 und die Aufwickelrolle 11 der Wickelvorrichtung 7 sind dabei im nicht dargestellten Grundkörper 2, an dem der Zangenarm 3 befestigt ist, angeordnet.

In dieser Ausführung ist der Zangenarm 3 der Punktschweißzange 1 aus einem Grundprofil 15 gebildet, an welchem beiderseits Seitenteile 16 angeordnet sind, welche über das Grundprofil 15 hinausragen, so dass eine Vertiefung gebildet wird, welche als Führungsnut 8 für das Band 6 dient. Die Seitenteile 16 können aus Aluminium gefertigt werden, wodurch eine enorme Gewichtsersparnis erreicht wird. Natürlich können die Seitenteile 16 aus jedem möglichen anderen Material gefertigt sein. Die Führungsnut 8 ist derart ausgebildet, dass die Fläche, an welcher das Band 6 entlang läuft, als Gleitfläche 9 dient.

An den Stirnseiten 17 der Seitenteile 16 ist bevorzugt eine Abdeckplatte 18 angeordnet, welche die ausgebildete Führungsnut 8 zwischen den Seitenteilen 16 abdeckt. Dadurch wird das Band 6 nicht nur besser geführt, sondern das Band 6 und die Führungsnut 8 sowie die Gleitfläche 9 werden des Weiteren auch noch vor Verschmutzungen jeglicher Art geschützt, da das Band 6 erst ab dem Bereich der Elektrode 5 im "Freien" verläuft.

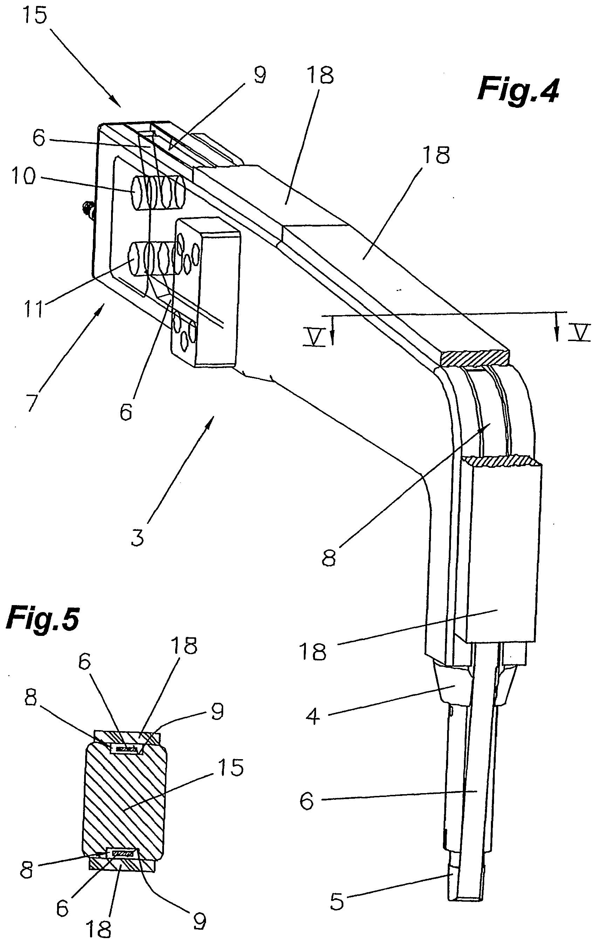

In Fig.4 und 5 ist eine weitere Ausführungsform eines Zangenarms 3 einer Punktschweißzange 1 dargestellt. Die Abspulrolle 10 und die Aufwickelrolle 11 der Wickelvorrichtung 7 sind dabei im Zangenarm 3 integriert. Weiters ist in dem Grundprofil 15 des Zangenarms 3 die Führungsnut 8 eingearbeitet, die sich vom Anfang des Zangenarms 3, also von der Position der Abspulrolle 10 oder Aufwickelrolle 11 bis zur Elektrode 5 erstreckt. Die Führungsnut 8 wird dabei bevorzugt durch Fräsen des Grundprofils 15 gebildet. Dabei ist es möglich, die Führungsnut 8 wieder durch eine Abdeckplatte 18 abzudecken. Bei einer derartigen Konstruktion besteht der Zangenarm 3 nur aus wenigen Teilen.

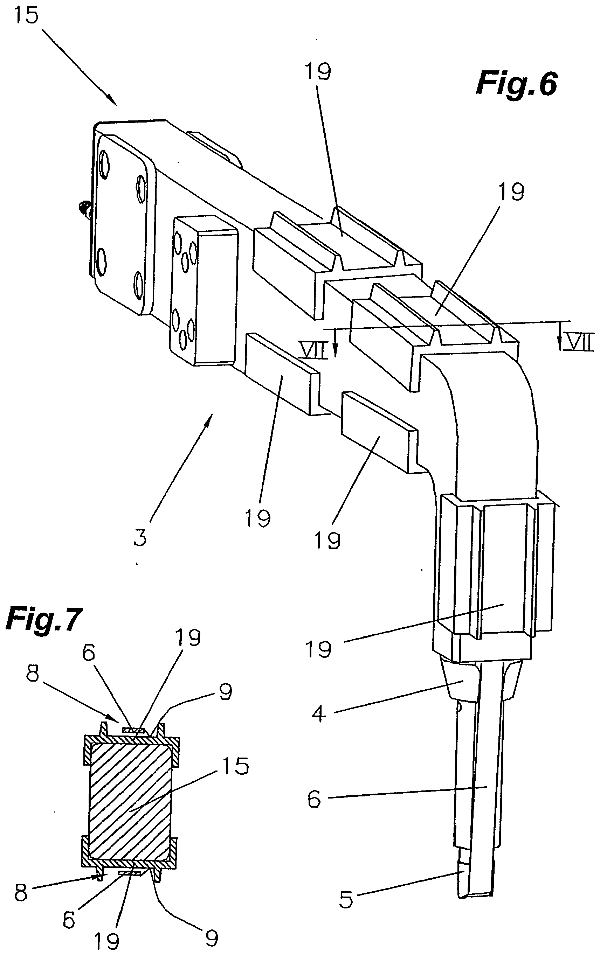

Ein weiteres Ausführungsbeispiel ist in den Fig.6 und 7 gezeigt. Dabei ist die Führungsnut 8 durch zusätzliche Führungselemente 19 gebildet, welche auf dem Zangenarm 3 und/oder auf der Elektrodenaufnahme 4 aufgesteckt oder aufgeschraubt sind. Die Führungselemente 19 sind also als Zusatzbauteile ausgeführt und werden auf dem Grundprofil 15 befestigt. Dadurch können handelsübliche Punktschweißzangen 1 auf ein Bandsystem umgerüstet werden, ohne dass die Zangenarme 3 und/oder die Elektrodenaufnahme 4 getauscht bzw. bearbeitet werden müssen. Die Führungselemente 19 können aus Kunststoff, aber auch aus jedem anderen Material gefertigt sein.

Die Wickelvorrichtung 7, die Abspulrolle 10 und die Aufwickelrolle 11 können ebenfalls als Zusatzelement ausgebildet werden und nachträglich in einfacher Form am Grundkörper 2 bzw. am Zangenarm 3 montiert werden (nicht dargestellt).

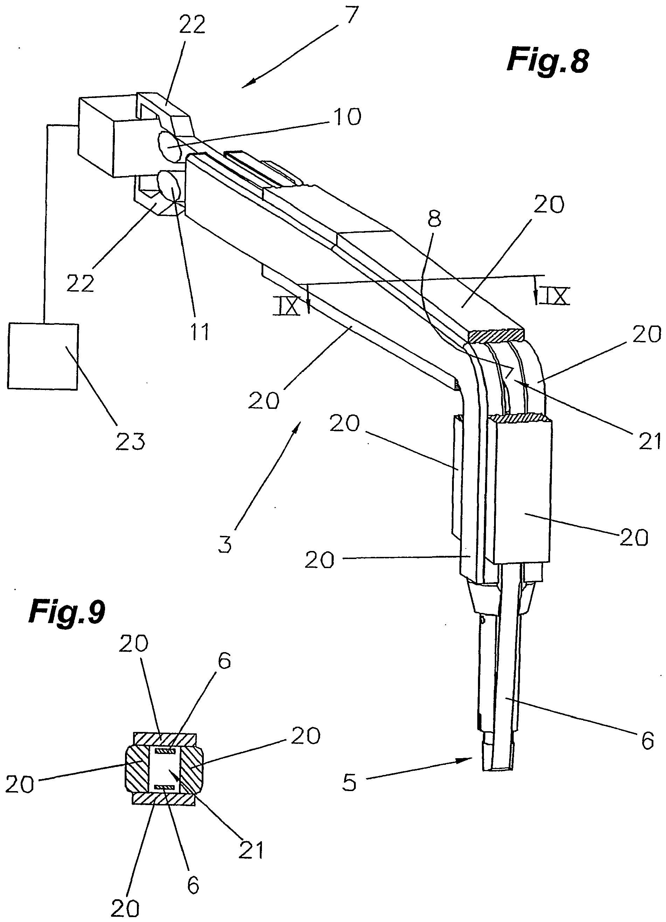

Der Zangenarm 3 kann entsprechend den Fig.8 und 9 auch aus mehreren Einzelteilen 20 gebildet sein, die derart miteinander verbunden werden, dass im Zentrum des Zangenarms 3 ein Hohlraum 21 gebildet wird, in welchem das Band 6 verläuft. Die Einzelteile 20 können entweder zusammengeschraubt oder auch zusammengesteckt sein. Natürlich kann der Zangenarm 3 auch durch ein Profilrohr gebildet sein, an welchem eingearbeitete Führungsnuten 8 sowohl an den Innenseiten des Profilrohres als auch an den Außenseiten des Profilrohres angeordnet sein können.

Bevorzugt ist im Bereich der Abspulrolle 10 und/oder der Aufwickelrolle 11 eine Bremsvorrichtung 22 für das Band 6 angeordnet, welche von einer Steuervorrichtung 23 angesteuert wird und das Band 6 gespannt hält. Damit wird verhindert, dass das Band 6 sich in dem Hohlraum 21 oder in der Führungsnut 8 verkeilt bzw. lose herumhängt. Die Bremsvorrichtung 22 kann dabei ebenfalls bei den zuvor beschriebenen Ausführungsformen verwendet werden, und ist bevorzugt in der Wickelvorrichtung 7 integriert. Auf eine detaillierte Darstellung wird dabei verzichtet, da die Ausbildung auf die unterschiedlichste Weise erfolgen kann. Dabei könnte die Bremsvorrichtung 22 durch zwei zueinander bewegbare Druckelemente gebildet werden, zwischen denen das Band 6 geführt wird, wobei bei aktivierter Bremsvorrichtung 22 diese Druckelemente auf das Band 6 gefahren werden und somit das Band 6 fixiert wird. Die Aufgabe der Bremsvorrichtung 22 liegt also darin, dass diese nach dem Weiterbewegen des Bandes 6 dieses fixiert, so dass das Band 6 immer gespannt ist.

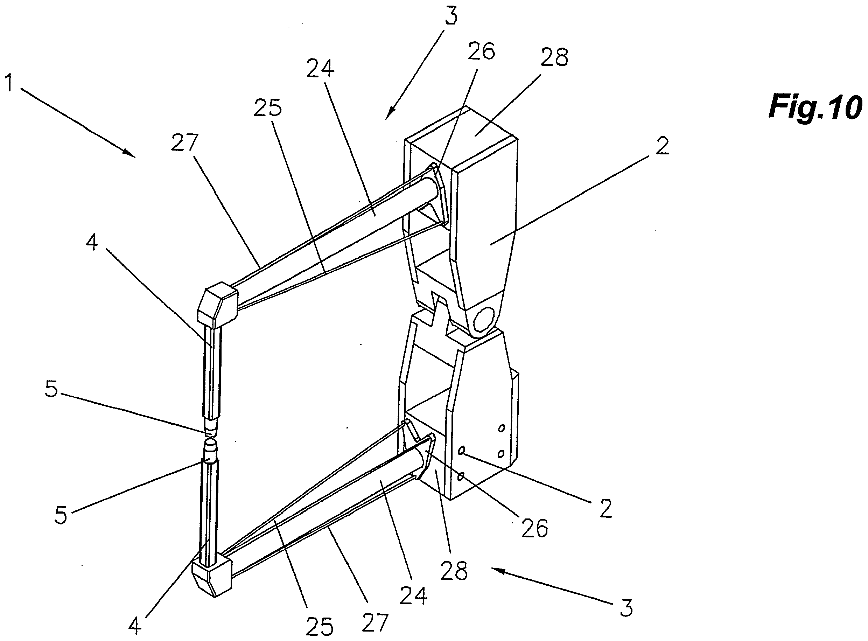

In Fig.10 ist eine Punktschweißzange 1 für Roboteranwendungen zum Widerstandsschweißen von Werkstücken, insbesondere Blechen, perspektivisch dargestellt. An einem Grundkörper 2 sind wiederum schwenkbar gelagerte Zangenarme 3 mit Elektrodenaufnahmen 4 zur Aufnahme der Elektroden 5 befestigt. Die Zangenarme 3 sind über ein Betätigungsmittel 13 (siehe Fig.1) verstellbar. Das Betätigungsmittel 13 kann dabei durch einen Servomotor oder einen Zylinder 14 oder auch jede andere mögliche Betätigungsart gebildet sein.

Bei dieser Punktschweißzange 1 ist ein Hauptelement 24 durch zumindest eine Zugstrebe oder ein Zugseil 25 vorgespannt. Der Zangenarm 3 kann beispielsweise aus einem Hauptelement 24 und zumindest einer am Hauptelement 24 befestigten Halteplatte 26 bestehen. Das Hauptelement 24 ist bevorzugt in Form eines Rundprofils ausgebildet. An einem oder mehreren Punkten der Halteplatte 26 ist eine Zugstrebe oder ein Zugseil 25 befestigt und mit dem Hauptelement 24 verbunden. Die Zugstrebe oder das Zugseil 25 ist auf jener Seite des Hauptelements 24 befestigt, auf welcher sich die Elektrodenaufnahme 4 erstreckt. Weiters ist es möglich, dass auf der gegenüberliegenden Seite der Zugstrebe oder des Zugseils 25 eine Haltestrebe bzw. ein Halteseil 27 angeordnet ist.

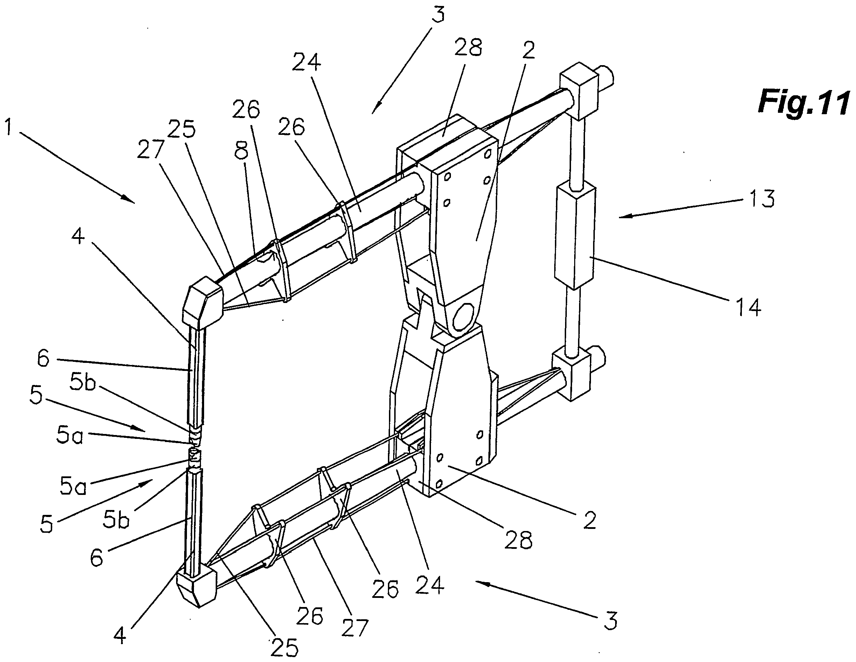

Der Zangenarm 3 wird über die Halteplatte 26 mit dem Grundkörper 2, insbesondere mit einem Aufnahmeelement 28, verbunden. Selbstverständlich ist es möglich, dass die Halteplatte 26 entfallen kann und das Hauptelement 24 sowie das Zugseil 25 und gegebenenfalls das Halteseil 27 direkt mit dem Aufnahmeelement 28 verbunden wird. Wesentlich ist dabei, dass das Zugseil 25 bzw. das Halteseil 27 auf einer Seite des Hauptelements 24 vom Hauptelement 24 distanziert angeordnet ist und sowohl das Zugseil 25 als auch das Halteseil 27 mit dem Hauptelement 24 oder einem am Hauptelement 24 angeordneten Befestigungselement (nicht dargestellt) verbunden ist. Somit wird nämlich erreicht, dass über das Zugseil 25 und/oder das Halteseil 27 entsprechende Zug- und Haltekräfte auf das Hauptelement 24 des Zangenarms 3 aufgebaut werden können. Hierzu sind die Zugstrebe bzw. das Zugseil 25 und/oder die Haltestrebe bzw. das Halteseil 27 in einem Winkel, bevorzugt zwischen 10° und 30° zum Hauptelement 24 angeordnet, d.h., dass diese zumindest in einem Teilbereich winkelig zur Oberfläche des Hauptelements 24 verlaufen. Es ist nämlich möglich, dass das Zugseil 25 und/oder das Halteseil 27 über einen Teilbereich parallel zur Oberfläche des Hauptelements 24 geführt werden, wobei jedoch im Verbindungsbereich diese winkelig verlaufen, wie dies beispielsweise in Fig.11 dargestellt ist.

Durch eine derartige Ausbildung des Zangenarms 3 wird erreicht, dass das Hauptelement 24 einen sehr geringen Querschnitt aufweisen kann, da die Druckkräfte der Punktschweißzange 1 über das Zugseil 25 und/oder das Halteseil 27 aufgenommen werden. Somit kann das Gewicht der Punktschweißzange 1 wesentlich verringert werden.

In Fig.11 ist ein weiteres Ausführungsbeispiel mit einem derartigen Zangenarmsystem mit Seilen bzw. Streben gezeigt. Dabei erstreckt sich nunmehr das Hauptelement 24 des Zangenarms 3 über den Grundkörper 2 der Punktschweißzange 1 hinaus, wobei dieser im Grundkörper 2 beweglich gelagert ist bzw. die beiden Grundkörper 2 zueinander beweglich gelagert sind. Der Zangenarm 3 ragt an der gegenüberliegenden Seite, an dem der Elektrodenhalter 4 befestigt ist, über den Grundkörper 2 hinaus und ist im Grundkörper 2 beweglich gelagert, so dass ein Hebel gebildet wird. Der über den Grundkörper 2 hinausragende Teil des Zangenarms 3 ist mit dem Betätigungselement 13 verbunden. Das Betätigungselement 13 kann durch einen Zylinder 14 gebildet werden. Durch ein Verstellen des Zylinders 14 wird der Zangenarm 3 derart verstellt, dass die beiden Elektroden 5 aneinander gepresst werden bzw. voneinander wegbewegt werden.

Bei dem in Fig.11 gezeigten Ausführungsbeispiel sind am Zangenarm 3, insbesondere am Hauptelement 24 mehrere Halteplatten 26 angeordnet, über die das Zugseil 25 und die Haltestrebe bzw. das Halteseil 27 distanziert geführt sind. Das Zugseil 25 ist mit dem Aufnahmeelement 28 am Grundkörper 2 und mit dem Zangenarm 3 befestigt, wogegen das Halteseil 27 vom Endbereich des Zangenarms 3 mit der Elektrodenaufnahme 4 sich auf die gegenüberliegende Seite des Grundkörpers 2 erstreckt und dort mit dem Zangenarm 3 verbunden ist. Dies ist auch bei dem Zugseil 25 möglich.

Bei derartigen Punktschweißzangen 1 ist es wesentlich, dass über das Zugseil 25 und über das Halteseil 27 die Kräfte beim Zusammenpressen der Punktschweißzange 1 aufgenommen werden, so dass das Hauptelement 24 wesentlich kleiner dimensioniert werden kann. Somit wird in einfacher Art und Weise eine sehr wesentliche Gewichtseinsparung erzielt.

Für den Einsatz des Bandes 6 zum Schutz der Elektroden weisen die Halteplatten 26 entsprechende Öffnungen auf, die gleichzeitig als Führungsnut 8 bzw. Kanal verwendet werden. Die Abspulrolle 10 und Aufwickelrolle 11 können im Grundkörper 2 integriert werden (siehe Fig.1).

## Patentansprüche

1. Punktschweißzange (1) für Roboteranwendungen zum Widerstandsschweißen von Werkstücken, insbesondere Blechen, mit an einem Grundkörper (2) schwenkbar gelagerten Zangenarmen (3), welche über ein Betätigungsmittel (13) verstellbar sind, und an welchen Elektrodenaufnahmen (4) für die Elektroden (5) befestigt sind, und mit einer eine Abspulrolle (10) und eine Aufwickelrolle (11) umfassenden Wickelvorrichtung (7) zum Auf- und Abwickeln eines Bandes (6) zum Schutz zumindest einer Elektrode (5), wobei die Abspulrolle (10) und die Aufwickelrolle (11) der Wickelvorrichtung (7) am Grundkörper (2) oder am Zangenarm (3) angeordnet ist, **dadurch gekennzeichnet, dass** am Zangenarm (3) und an der Elektrodenaufnahme (4) zumindest eine Führungsnut (8) für die Führung des Bandes (6) entlang des Zangenarmes (3) angeordnet ist, und an jeder Elektrode (5) im Bereich einer Elektrodenkappe ein Distanzhalter (5a) und ein Druckelement (5b) angeordnet sind, die in Längsrichtung der Elektrode (5) beweglich mit dieser verbunden sind, wobei das Druckelement (5b) eine Kraft auf den Distanzhalter (5a) ausübt und der Distanzhalter (5a) und das Druckelement (5b) eine Führung für das Band (6) aufweisen, sodass bei geschlossenen Zangenarmen (3) der Distanzhalter (5a) zurückgeschoben wird und die Elektrode (5) am Band (6) zum Anliegen kommt, und während oder nach dem Öffnen der Zangenarme (3) das Band (6) von der Elektrode (5) distanzierbar ist.

2. Punktschweißzange nach Anspruch 1, **dadurch gekennzeichnet, dass** am Zangenarm (3) und bzw. oder an der Elektrodenaufnahme (4) Vorrichtungen zum Führen und Umlenken des Bandes (6), insbesondere Umlenkrollen und Gleitflächen (9), angeordnet sind.

3. Punktschweißzange nach Anspruch 1 oder 2, **dadurch gekennzeichnet, dass** die Abspulrolle (10) und bzw. oder die Aufwickelrolle (11) mit einem Antriebsmittel (12), insbesondere einem elektronisch ansteuerbaren Motor, gekoppelt ist.

4. Punktschweißzange nach einem oder mehreren der Ansprüche 1 bis 3, **dadurch gekennzeichnet, dass** der Zangenarm (3) aus einem Grundprofil (15) gebildet ist, und dass beiderseits des Grundprofils (15) Seitenteile (16) angeordnet sind, die über das Grundprofil (15) hinausragen und die dadurch entstehende Vertiefung als Führungsnut (8) für das Band (6) ausgebildet ist.

5. Punktschweißzange nach Anspruch 4, **dadurch gekennzeichnet, dass** an den Stirnseiten (17) der Seitenteile (16) zumindest eine Abdeckplatte (18) zur Abdeckung der zwischen den Seitenteilen (16) gebildeten Führungsnut (8) angeordnet ist.

6. Punktschweißzange nach einem oder mehreren der Ansprüche 1 bis 3, **dadurch gekennzeichnet, dass** der Zangenarm (3) aus einem Grundprofil (15) gebildet ist, und dass in dem Grundprofil (15) die Führungsnut (8) eingearbeitet ist.

7. Punktschweißzange nach einem oder mehreren der Ansprüche 1 bis 3, **dadurch gekennzeichnet, dass** die Führungsnut (8) durch zusätzliche Führungselemente (19) gebildet ist, die am Zangenarm (3) und bzw. oder der Elektrodenaufnahme (4) angeordnet, beispielsweise aufgesteckt oder aufgeschraubt, sind.

8. Punktschweißzange nach einem oder mehreren der Ansprüche 1 bis 3, **dadurch gekennzeichnet, dass** der Zangenarm (3) aus mehreren Einzelteilen (29) gebildet ist, welche derart miteinander verbunden sind, dass im Zentrum des Zangenarms (3) ein Hohlraum (21) zur Führung des Bandes (6) ausgebildet ist.

9. Punktschweißzange nach einem oder mehreren der Ansprüche 1 bis 8, **dadurch gekennzeichnet, dass** eine Bremsvorrichtung (22) zum Fixieren und Spannen des Bandes (6) vorgesehen ist.

10. Punktschweißzange nach Anspruch 9, **dadurch gekennzeichnet, dass** die Bremsvorrichtung (22) mit einer Steuervorrichtung (23) verbunden ist.

## Claims

1. Spot welding tongs (1) for robotic applications for the resistance welding of workpieces and, in particular, sheet metals, of the type including tong arms (3) which are each pivotally mounted on a base body (2) and adjustable by an actuating means (13) and to which electrode holders (4) for the electrodes (5) are fastened, and further including winding means (7) comprising a wind-off roller (10) and a wind-up roller (11) for winding off and on a strip (6) for the protection of at least one electrode (5), wherein the wind-off roller (10) and the wind-up roller (11) of the winding means (7) are arranged on the base body (2) or on the tong arm (3), **characterized in that** at least one guiding groove (8) is provided on the tong arm (3) and on the electrode holder (4) for the guidance of the strip (6) along the tong arm (3), and that a spacer (5a) and a pressure element (5b) are arranged in the region of an electrode cap so as to be movably connected with the electrode (5) in the longitudinal direction of the same, said pressure element (5b) exerting a force on the spacer (5a), and the spacer (5a) and the pressure element (5b) comprising a guide for the strip (6) so that, with the tong arms (3) closed, the spacer (5a) is pushed back so as to cause the electrode (5) to contact the strip (6) and, during or after the opening of the tong arms (3), the strip (6) is enabled to be kept at a distance from the electrode (5).

2. Spot welding tongs according to claim 1, **characterized in that** means for guiding and deflecting the strip (6), in particular deflection pulleys and slide surfaces (9), are provided on the tong arm (3) and/or electrode holder (4).

3. Spot welding tongs according to claim 1 or 2, **characterized in that** the wind-off roller (10) and/or the wind-up roller (11) is coupled with a driving means (12) and, in particular, an electronically activatable motor.

4. Spot welding tongs according to one or several of claims 1 to 3, **characterized in that** the tong arm (3) is formed by a base section (15), and that side pieces (16) are arranged on either side of the base section (15) to project beyond the base section (15), and the thus formed depression is designed as a guiding groove (8) for the strip (6).

5. Spot welding tongs according to claim 4, **characterized in that** at least one cover plate (18) is arranged on the end sides (17) of the side pieces (16) to cover the guiding groove (8) formed between the side pieces (16).

6. Spot welding tongs according to one or several of claims 1 to 3, **characterized in that** the tong arm (3) is formed by a base section with the guiding groove (8) being incorporated in the base section (15).

7. Spot welding tongs according to one or several of claims 1 to 3, **characterized in that** the guiding groove (8) is formed by additional guiding elements (19) which are provided, for instance slipped or screwed, on the tong arm (3) and/or electrode holder (4).

8. Spot welding tongs according to one or several of claims 1 to 3, **characterized in that** the tong arm (3) is comprised of several individual components (29) which are connected with one another in a manner that a hollow space (21) is formed in the center of the tong arm (3) for the guidance of the strip (6).

9. Spot welding tongs according to one or several of claims 1 to 8, **characterized in that** a braking device (22) is provided to fix and stretch the strip (6).

10. Spot welding tongs according to claim 9, **characterized in that** the braking device (22) is connected with a control unit (23).

## Revendications

1. Pince à souder par points (1) pour des utilisations sur des robots, destinée au soudage par résistance de pièces, en particulier de tôles, avec des bras de pince (3), supportés en pivotement sur un corps de base (2), qui sont réglables par le biais d'un moyen d'actionnement (13) et sur lesquels sont fixés des logements d'électrodes (4) pour les électrodes (5), et avec un dispositif d'enroulement (7) comprenant une bobine débitrice (10) et une bobine réceptrice (11) pour l'enroulement et le déroulement d'une bande (6) pour protéger au moins une électrode (5), la bobine débitrice (10) et la bobine réceptrice (11) du dispositif d'enroulement (7) étant disposée sur le corps de base (2) ou sur le bras de pince (3), **caractérisée en ce que**, sur le bras de pince (3) et sur le logement d'électrodes (4), il est disposé au moins une rainure de guidage (8) pour le guidage de la bande (6) le long du bras de pince (3) et, sur chaque électrode (5), dans la zone d'un capuchon d'électrode, il est disposé une pièce d'espacement (5a) et un élément de pression (5b) qui sont raccordés de façon mobile à l'électrode (5) dans la direction longitudinale de celle-ci, l'élément de pression (5b) exerçant une force sur la pièce d'espacement (5a), et la pièce d'espacement (5a) et l'élément de pression (5b) présentant un guidage pour la bande (6) de telle sorte que, quand les bras de pince (3) sont fermés, la pièce d'espacement (5a) est poussée en arrière et l'électrode (5) vient en appui contre la bande (6) et, pendant ou après l'ouverture des bras de pince (3), la bande (6) peut être mise à distance de l'électrode (5).

2. Pince à souder par points selon la revendication 1, **caractérisée en ce que**, sur le bras de pince (3) et respectivement ou sur le logement d'électrodes (4), il est disposé des dispositifs pour le guidage et le renvoi de la bande (6), en particulier des rouleaux de renvoi et des surfaces de glissement (9).

3. Pince à souder par points selon la revendication 1 ou 2, **caractérisée en ce que** la bobine débitrice (10) et respectivement ou la bobine réceptrice (11) est couplée à un moyen d'entraînement (12), en particulier un moteur pouvant être commandé électroniquement.

4. Pince à souder par points selon l'une ou plusieurs des revendications 1 à 3, **caractérisée en ce que** le bras de pince (3) est formé d'un profilé de base (15) et **en ce que**, des deux côtés du profilé de base (15), il est disposé des parties latérales (16) qui dépassent du profilé de base (15), et le creux ainsi créé est constitué en tant que rainure de guidage (8) pour la bande (6).

5. Pince à souder par points selon la revendication 4, **caractérisée en ce que**, sur les côtés frontaux (17) des parties latérales (16), il est disposé au moins une plaque de couverture (18) destinée à couvrir la rainure de guidage (8) formée entre les parties latérales (16).

6. Pince à souder par points selon l'une ou plusieurs des revendications 1 à 3, **caractérisée en ce que** le bras de pince (3) est formé d'un profilé de base (15), et **en ce que** la rainure de guidage (8) est intégrée dans le profilé de base (15).

7. Pince à souder par points selon l'une ou plusieurs des revendications 1 à 3, **caractérisée en ce que** la rainure de guidage (8) est formée d'éléments de guidage (19) supplémentaires qui sont disposés sur le bras de pince (3) et respectivement ou sur le logement d'électrodes (4), par exemple par emboîtement ou par vissage.

8. Pince à souder par points selon l'une ou plusieurs des revendications 1 à 3, **caractérisée en ce que** le bras de pince (3) est formé de plusieurs parties individuelles (29) qui sont raccordées les unes aux autres de telle sorte qu'une cavité (21) destinée à guider la bande (6) est constituée au centre du bras de pince (3).

9. Pince à souder par points selon l'une ou plusieurs des revendications 1 à 8, **caractérisée en ce qu'**il est prévu un dispositif de freinage (22) pour la fixation et la tension de la bande (6).

10. Pince à souder par points selon la revendication 9, **caractérisée en ce que** le dispositif de freinage (22) est raccordé à un dispositif de commande (23).
